Europäisches Patentamt

European Patent Office

Office européen des brevets

(19)

(11) Veröffentlichungsnummer: **0 124 841**
**B1**

(12) **EUROPÄISCHE PATENTSCHRIFT**

(45) Veröffentlichungstag der Patentschrift:
16.09.87

(21) Anmeldenummer: **84104816.8**

(22) Anmeldetag: **28.04.84**

(51) Int. Cl.⁴: **B 01 D 46/04,** B 01 D 46/12

(54) Verfahren zum Waschen der Filterelemente eines Gasfilters und Vorrichtung zum Durchführen des Verfahrens.

(30) Priorität: **06.05.83 DE 3316527**

(43) Veröffentlichungstag der Anmeldung:
**14.11.84 Patentblatt 84/46**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**DE - A - 3 022 203**
**DE - B - 2 521 828**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Löffelmann, Rudolf, Erlenweg 44, D-4018 Langenfeld (DE)**
Erfinder: **Freese, Hubert, Am Falder 81, D-4000 Düsseldorf 13 (DE)**
Erfinder: **Martini, Ulrich, Robert-Kochstrasse 31, D-4019 Monheim (DE)**

## Beschreibung

Die Erfindung betrifft ein Verfahren zum Waschen der mit wasserlöslichen Produkten beladenen Filterelemente (d.h.: Filterschläuche oder Filtertaschen eines Gasfilters), die in dem Gasfilter verbleiben, mittels über Sprühdüsen auf die Innen- und/oder Aussenfläche der Filterelemente angeförderter Spülflüssigkeitsstrahlen mit zusätzlicher pneumatischer Abreinigung. Sie betrifft ferner eine Vorrichtung zum Durchführen des Verfahrens.

In Gasfiltern, d.h. in filternden Abscheidern für Gase, werden als Filtermedien vorzugsweise Gewebe oder Nadelfilze aus Natur- oder Synthesefasern eingesetzt. Die Filterelemente besitzen vorwiegend Schlauch- oder Taschenform. Um Druckverlust, Volumenstrom und Abscheideleistung eines solchen Filters längere Zeit konstant zu halten, werden die Filterelemente meist pneumatisch oder mechanisch vom abgelagerten Staub befreit. Diese überwiegend periodische Abreinigung kann – ähnlich, wie in der DE-A-33 01 872 (Anmeldetag: 21.01.83; Offenlegungstag: 27.07.84) angegeben wird, – bei laufender Anlage erfolgen.

Wird ein solches Gasfilter über einen längeren Zeitraum betrieben, so lagern sich trotz der mechanischen oder pneumatischen Abreinigung Feststoffpartikel und/oder auch z.B. flüchtige organische Bestandteile, die zu einer geringeren Luftdurchlässigkeit führen, an das Filtermedium an. Folglich steigt der Energieaufwand für das Filtern an und/oder der Volumenstrom des zu reinigenden Gases sinkt, so dass die Leistung vermindert wird. Um in dieser Hinsicht Abhilfe zu schaffen, wurde schon vorgeschlagen, Polytetrafluoräthylen-Fasern zum Herstellen der Filterelemente zu verwenden, weil wegen des Antihafteffektes dieser Fasern ein Anlagern von Fremdstoffen in nennenswertem Umfang nicht zu erwarten ist. Das Material ist jedoch relativ kostenaufwendig und besitzt eine gegenüber anderen Fasern geringe mechanische Festigkeit.

Es ist notwendig, gelegentlich die Filterelemente für eine Grundreinigung, insbesondere zum Waschen, auszubauen. Diese Arbeit ist nicht nur personalaufwendig, sondern auch, vor allem bei von aussen beaufschlagten, schlauch- oder taschenförmigen Filterelementen, wegen der Kontamination der Atemluft unter Umständen gesundheitsschädlich. Schliesslich muss die Gesamtanlage während des Aus- und Einbaus relativ lange Zeit ausser Betrieb gesetzt werden.

Aus DE-A-30 22 203 ist ein Verfahren und eine Vorrichtung der eingangs genannten Gattung zum Regenerieren von Gasfiltereinsätzen bekannt. Dabei wird auch empfohlen, die Reinigung in dem Filtergehäuse selbst durchzuführen. Die Sprühdüsen sind dergestalt angeordnet, dass die hieraus austretenden Sprühstrahlen lediglich den oberen Bereich der Gasfiltereinsätze, insbesondere deren Aufhängung, beaufschlagen. Man geht hinsichtlich der Reinigungswirkung von der Vermutung aus, dass sich bei den Staubkörnern, die weiter unten im Filtermedium eingeklemmt sind, die Reibung so vermindert, dass Pressluftstösse genügen, um im unteren Bereich der Gasfiltereinsätze eine Abreinigung zu ermöglichen.

Diese Arbeitsweise kann bei wasserlöslichen Stäuben zu keinen befriedigenden Ergebnissen führen, weil hierbei nicht von einer Reibungsverminderung der Staubkörner im Filtermedium ausgegangen werden kann. Vielmehr ist eher eine Verklebung des Filtermediums durch den angelösten Staub zu befürchten.

Aus DE-A-25 21 828 ist ein Verfahren bekannt zur Reinigung von Gasfiltereinsätzen in einer gesonderten Reinigungskabine. Dieses Vorgehen beschwört die Gefahr der Verschmutzung der Atemluft für das Bedienungspersonal herauf. Ferner sind durch Aus- und Einbau der Filtereinsätze in das Filtergehäuse bzw. in die Reinigungskabine nicht vernachlässigbare Betriebsstillstandszeiten zu berücksichtigen.

Durch dieses Verfahren war es bekannt, die Gasfiltereinsätze dadurch zu reinigen, dass man diese vermittels Düsen von aussen bzw. von innen mit Flüssigkeit besprüht und die Einsätze gleichzeitig vermittels Pressluftstössen walkt. Schliesslich hat man dann die so gereinigten Einsätze durch erwärmte Luft getrocknet.

Die Aufgabe bestand demnach darin, die Grundreinigung bzw. Filterwäsche innerhalb des Gasfilters hinsichtlich der Aufwendungen für Arbeitsstunden und Produktionsausfall wegen eines Stillstands der Anlage weiter herabzusetzen. Dabei darf die Atemluft für die beschäftigten Personen nicht verunreinigt werden.

Die erfindungsgemässe Lösung besteht für das Verfahren eingangs genannter Art in der Kombination der Massnahmen gemäss Anspruch 1.

Durch die Installation von aus Rohrleitungen und Sprühdüsen bestehenden Waschvorrichtungen im Filter bzw. an dessen (innerem) Umfang wird erfindungsgemäss erreicht, dass die Filterelemente ohne Ausbau und damit bei geringerem Produktionsausfall sowie mit weniger Arbeitsstunden als bisher zu waschen sind, ohne dass die Gefahr einer Atemluft-Verunreinigung der an der Anlage beschäftigten Personen besteht.

Gemäss weiterer Erfindung ist eine Vorrichtung zum Durchführen des Verfahrens bei einem Gasfilter mit einer Vielzahl von in Reihen und Spalten angeordneten Filterelementen, Spülflüssigkeitsleitungen, Sprühdüsen sowie Mitteln zur pneumatischen Abreinigung gekennzeichnet durch eine allen Spalten oder Reihen zugeordneten ersten beweglich angeordneten bzw. gelagerten Spülflüssigkeitsleitung mit parallel zur Filterfläche der Elemente bewegbaren gruppenweise angeordneten Sprühdüsen wobei je eine Sprühdüse pro Spalte oder Reihe an der Staubluftseite in den Zwischenraum von benachbarten Spalten oder Reihen angeordnet ist, sowie mit einer ebenfalls allen Spalten oder Reihen zugeordneten zweiten beweglich angeordneten bzw. gelagerten Spülflüssigkeitsleitung mit parallel zur Filterfläche der Elemente bewegbaren, auf der Reinluftseite angeordneten, in vertikaler Richtung gestreute und in die Zwischenräume zwischen je zwei benachbarte Spalten oder Reihen von hängenden Filterelementen gerichtete Sprühstrahlen entlassenden Sprühdüsen. Die nassen Filterelemente werden nach der Wäsche getrocknet, indem Warmluft von ca. 100 °C etwa eine Stunde lang durch das Filter geleitet wird. Eine ausreichende Trocknung ist auch gewährleistet, wenn das Filter nach der Wäsche für einen längeren Zeitraum nicht verwendet wird.

Anhand der schematischen Darstellung werden Einzelheiten der Erfindung erläutert. Es zeigen:

Fig. 1 einen senkrechten Schnitt durch ein Gasfilter mit hängenden, bei Betrieb von aussen mit Staubluft zu beaufschlagenden Filterschläuchen und von der Staubluftseite her wirkenden Sprühdüsen;

Fig. 2 einen Schnitt längs der Linie II-II von Fig. 1; und

Fig. 3 einen senkrechten Schnitt durch das Gasfilter mit bei Betrieb von aussen mit Staubluft beaufschlagten Filterschläuchen, die mit Hilfe von Sprühdüsen in Gegenrichtung des normalen Betriebs zu waschen sind.

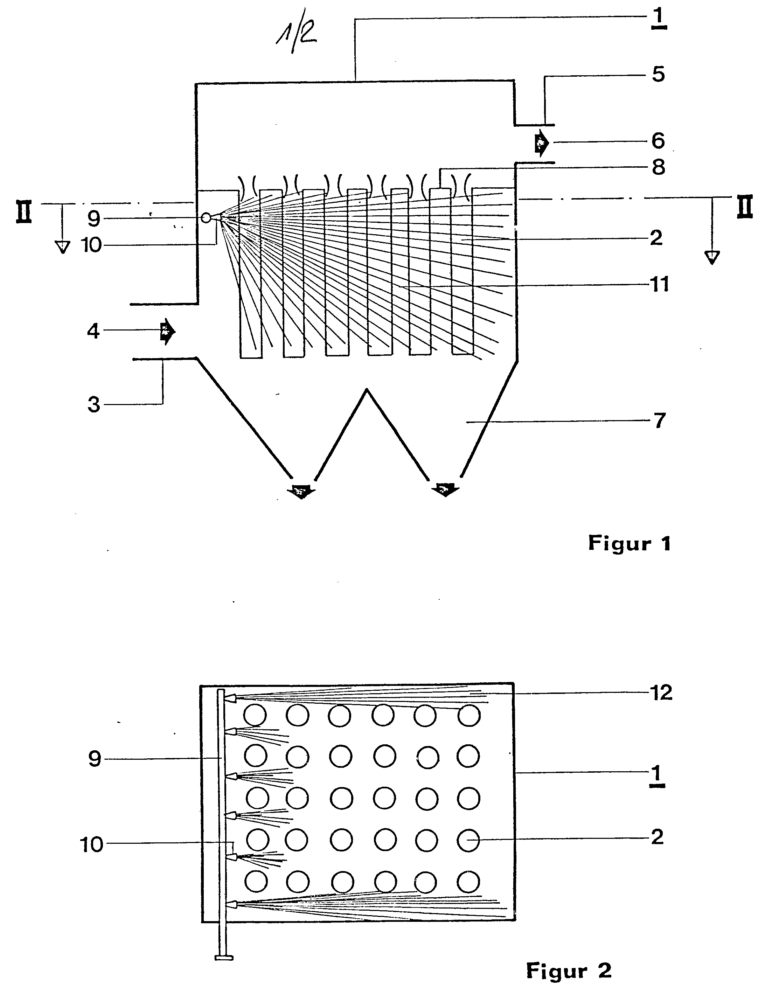

In Fig. 1 und 2 wird ein druckluftabreinigendes, insgesamt mit 1 bzeichnetes Gasfilter mit lediglich der Waschvorrichtung für den äusseren Umfang der Filterschläuche 2 dargestellt. Das Gasfilter 1 besitzt einen Einlassstutzen 3 zum Einführen der Staubluft 4, einen Auslassstutzen 5 zum Abführen der Reinluft 6 und Staub- bzw. Wasserauslasstrichter 7, die bei Normalbetrieb auf eine nicht gezeichnete Staubsammelstelle und beim Waschen auf einen Wasserabfluss geschaltet werden. Die Filterschläuche 2 hängen in einem Lochboden 8.

Die Waschvorrichtung besteht aus einer (ersten) Spülflüssigkeitsleitung 9 mit daran im Abstand der Reihen oder Spalten der zu reinigenden Filterschläuche 2 angesetzten Sprühdüsen 10. Diese werden vorzugsweise so ausgebildet, dass sie in einer ersten Ebene mit einem sehr weiten Sprühwinkel und in einer um 90° dazu gedrehten zweiten Ebene mit einem extrem kleinen Sprühwinkel arbeiten. Im Ausführungsbeispiel gemäss Fig. 1 und 2 sprühen die Düsen 10 einen in vertikaler Richtung breiten Strahlfächer 11 und in horizontaler Richtung eng ausgeblendeten Linienstrahl 12. Auf diese Weise gelingt es, alle Schläuche einer Reihe oder Spalte von einer am inneren Aussenrand des Gasfilters 1 angeordneten Leitung 9 aus intensiv mit Spülflüssigkeit zu benetzen und zu waschen. Die Spülflüssigkeitsleitung 9 selbst wird mobil ausgeführt. Insbesondere kann es für das Waschergebnis günstig sein, wenn die Spülflüssigkeitsleitung 9 beim Reinigen von Filterschläuchen 2 in vertikaler Richtung verschoben wird.

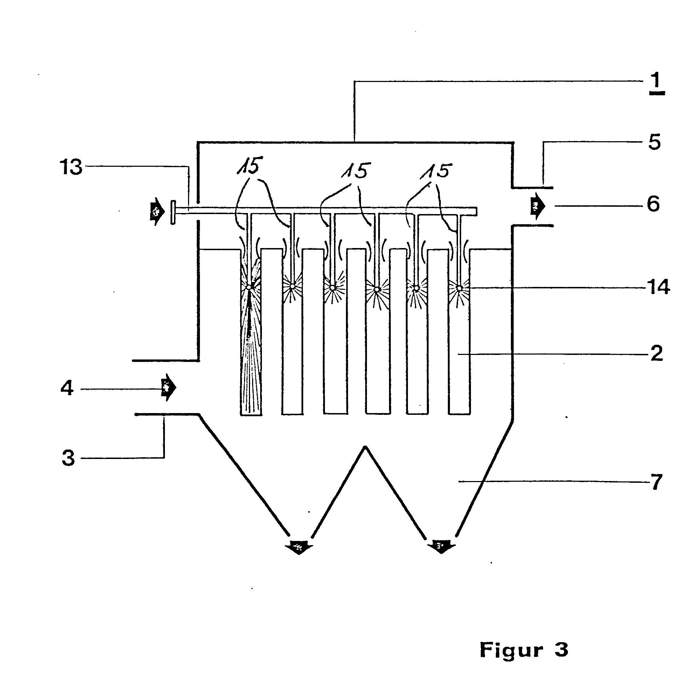

In Fig. 3 wird das Gasfilter 1 mit lediglich anstelle der von der Staubluftseite her einwirkenden Waschvorrichtung 9, 10 einer Waschvorrichtung dargestellt, die von der Reinluftseite her Spülflüssigkeit durch die Filterelemente strömen lässt. Die Spülflüssigkeit strömt hierbei entgegengesetzt zur Richtung der Luft oder dgl. bei normalem Betrieb des Gasfilters. Die Filterschläuche 2 werden dabei sowohl an der Innenseite bzw. Reinluftseite als auch an der Aussen- bzw. Staubluftseite gewaschen. Im Prinzip wird eine (zweite) Spülflüssigkeitsleitung 13 mit daran angesetzten Sprühdüsen 14 vorgesehen, die in horizontaler Richtung von einer zur nächsten Reihe bzw. Spalte von Filterelementen 2 zu versetzen ist. Die Sprühdüsen 14 hängen vorzugsweise nicht unmittelbar sondern über Rohrverlängerungen 15 an der Spülflüssigkeitsleitung 13, derart, dass es möglich ist, die Sprühdüsen 14 während der Spülphase vertikal innerhalb der Filterschläuche 2 oder dgl. zu bewegen und so eine intensivere Waschung zu erhalten.

In allen Fällen werden die Waschvorrichtungen vorzugsweise so ausgebildet, dass alle Filterelemente zumindest einer Reihe oder Spalte zugleich zu reinigen sind. Als Spülflüssigkeit wird bei wasserlöslichen Produkten Wasser verwendet. Versuche haben gezeigt, dass durch höhere Wassertemperaturen die Spüldauer verkürzt wird. Es können auch Wasser mit entsprechenden Zusätzen oder eine beliebige andere reinigende Flüssigkeit eingesetzt werden. Während des erfindungsgemässen Waschens der Filterelemente kann auch eine herkömmliche pneumatische oder mechanische Abreinigungsvorrichtung eingeschaltet werden, um den Reinigungseffekt zu unterstützen.

**Patentansprüche**

1. Verfahren zum Waschen der mit wasserlöslichen Produkten beladenen Filterelemente (d.h.: Filterschläuche oder Filtertaschen) (2) eines Gasfilters (1), die in dem Gasfilter (1) verbleiben, mittels über Sprühdüsen auf die Innen- und/oder Aussenfläche der Filterelemente (2) angeförderter Spülflüssigkeitsstrahlen mit zusätzlicher pneumatischer Abreinigung, dadurch gekennzeichnet, dass die Filterelemente (2) mit aus während des Waschvorgangs parallel zur Filterfläche der Elemente (2) bewegten gruppenweise angeordneten Sprühdüsen (10) gerichteten Spülflüssigkeitsstrahlen äusserlich (d.h. von der Staubluftseite her) abgewaschen und mit aus ebenfalls parallel zur Filterfläche der Elemente (2) bewegten Sprühdüsen (14) gerichteten Spülflüssigkeitsstrahlen von der Reinluftseite her durchströmt werden, wobei die Spülflüssigkeitsstrahlen auf der Staubluftseite im wesentlichen in Richtung der Staubluftzuführung (4) eingesprüht wird, dergestalt, dass jeder Sprühstrahl in vertikaler Richtung gestreut in die Zwischenräume zwischen je zwei benachbarte Spalten oder Reihen von hängenden Filterelementen (2) gerichtet wird.

2. Verfahren nach Anspruch 1, dadurch gekennzeichnet, dass die Filterelemente (2) nach der Wäsche vermittels durch das Filter (1) geleiteter Warmluft von ca. 100 °C getrocknet werden.

3. Verfahren nach Anspruch 1 oder 2, dadurch gekennzeichnet, dass die Spülflüssigkeit vor dem Aufsprühen auf die Filterelemente (2) erhitzt wird.

4. Vorrichtung zur Durchführung des Verfahrens nach einem der Ansprüche 1 bis 3, bestehend aus einem Gasfilter (1) mit einer Vielzahl von in Reihen oder in Spalten angeordneten Filterelementen (2), Spülflüssigkeitsleitungen (9, 13) Sprühdüsen (10, 14) sowie Mitteln zur pneumatischen Abreinigung, gekennzeichnet durch eine allen Spalten oder Reihen zugeordneten ersten beweglich angeordneten bzw. gelagerten Spülflüssigkeitsleitung (9) mit parallel zur Filterfläche der Elemente (2) bewegbaren gruppenweise angeordneten Sprühdüsen (10), wobei je eine Sprühdüse (10) pro Spalte oder Reihe an der Staubluftseite in den Zwischenraum von benachbarten Spalten oder Reihen angeordnet ist, sowie mit einer ebenfalls allen Spalten oder Reihen zugeordneten zweiten beweglich angeordneten bzw. gelagerten Spülflüssigkeitsleitung (13) mit parallel zur Filterfläche der Elemente (2) bewegbaren, auf der Reinluftseite angeordneten, in vertikaler Richtung gestreute und in die Zwischenräume zwischen je zwei benachbarte Spalten oder Reihen von hängenden Filterelementen (2) gerichtete Sprühstrahlen entlassenden Sprühdüsen (14).

## Revendications

1. Procédé pour laver les éléments de filtrage (2) chargés de produits hydrosolubles (c'est-à-dire conduites de filtrage ou poches de filtrage) d'un filtre à gaz (1), qui restent dans ce filtre à gaz, au moyen de jets de liquide de rinçage amenés en passant par des buses de pulvérisation, sur la surface intérieure et/ou extérieure des éléments de filtrage (2), avec nettoyage pneumatique supplémentaire, procédé caractérisé par le fait qu'on lave extérieurement (c'est-à-dire par le côté de l'air empoussiéré). Les éléments de filtrage (2) avec des jets de liquide de rinçage dirigés, depuis des buses de pulvérisation (10) disposées par groupe, se déplaçant pendant le processus de lavage parallèment à la surface de filtrage de ces éléments (2), lesquels sont également parcourus intérieurement, c'est-à-dire par le côté de l'air pur, par des jets de liquide de rinçage dirigés depuis des buses de pulvérisation (14) se déplaçant également parallèlement à leur surface de filtrage, les jets de liquide de rinçage étant pulvérisés, du côté de l'air empoussiéré, essentiellement dans la direction (4) de l'arrivée d'air empoussiéré, de telle sorte que chaque jet de pulvérisation est dirigé, à l'état dispersé en direction verticale, dans chacun des espacements existant entre deux colonnes ou rangées voisines de ces éléments de filtrage suspendus (2).

2. Procédé selon la revendication 1, caractérisé par le fait qu'après le lavage, on sèche les éléments de filtrage (2) au moyen d'air chaud à environ 100 °C que l'on fait passer à travers le filtre (1).

3. Procédé selon l'une ou l'autre des revendications 1 ou 2, caractérisé par le fait que l'on chauffe le liquide de rinçage avant la pulvérisation sur les éléments de filtrage (2).

4. Dispositif pour la mise en œuvre du procédé selon l'une quelconque des revendications 1 à 3, constitué d'un filtre à gaz (1) avec de multiples éléments de filtrage (2) disposés en rangées ou en colonnes, de canalisations à liquide de rinçage (9, 12), de buses de pulvérisation (10, 14) ainsi que de moyens de nettoyage pneumatique, caractérisé par le fait qu'il comporte une première canalisation à liquide de rinçage (9) disposée ou montée de façon mobile, adjointe à toutes les colonnes ou rangées, et pourvue de buses de pulvérisation (10) disposées par groupes de façon mobile parallèlement à la surface de filtrage des éléments (2), une buse de pulvérisation (10) étant disposée, par colonne ou rangée, du côté de l'air empoussiéré, dans chaque espacement situé entre les colonnes ou rangées voisines, ainsi qu'une deuxième canalisation à liquide de rinçage (13), également adjointe à toutes les colonnes ou rangées, disposées ou montée de façon mobile, et pourvue de buses de pulvérisation (14) disposées parallèlement à la surface de filtrage des éléments (2), du côté de l'air pur, et forunissant des jets de pulvérisation dispersés en direction verticale et dirigés dans chacun des espacements prévus entre deux colonnes ou rangées voisines de ces éléments de filtrage suspendus (2).

## Claims

1. Method for the washing of the filter elements (i.e. filter hoses or filter pockets) (2) of a gas filter (1), which are loaded with water-soluble products and remain in the gas filter (1), by means of rinsing liquid jets, which are conveyed by way of spray nozzles onto the inside surface and/or outside surface of the filter elements (2), with additional pneumatic cleaning-off, characterised thereby, that the filter elements (2) are washed off externally, i.e. from the dusty air side, by rinsing liquid jets directed out of spray nozzles (10), which are arranged in groups and moved parallelly to the filter surface of the elements (2) during the washing operation, and flowed through from the clean air side by rinsing liquid jets directed out of spray nozzles (14) likewise moved parallelly to the filter surface of the elements (2), wherein the rinsing liquid jets on the dusty air side are sprayed in substantially in direction of the dusty air feed (4) in such a manner that each spray jet is directed, scattered in vertical direction, into the intermediate spaces between each two neighbouring columns or rows of hanging filter elements (2).

2. Method according to claim 1, characterised thereby, that the filter elements (2) are dried after the washing by means of hot air at about 100 °C conducted through the filter (1).

3. Method according to claim 1 or 2, characterised thereby, that the rinsing liquid is heated before the spraying onto the filter elements (2).

4. Apparatus for the performance of the method according to one of the claims 1 to 3 and consisting of a gas filter (1) with a plurality of filter elements (2) arranged in rows or columns, rinsing liquid ducts (9, 13) spray nozzles (10, 14) as well as means for the pneumatic cleaning-off, characterised by a first rinsing liquid duct (9), which is movably arranged or borne and associated with all columns or rows, with spray nozzles (10), which are arranged in groups and movable parallelly to the filter surface of the elements (2), wherein a respective spray nozzle (10) for each column or row is arranged at the dusty air side in the intermediate space of neigh-bouring columns or rows as well as with a second rinsing liquid duct (13), which is movably arranged or borne and likewise associated with all columns or rows, with spray nozzles (14), which are movable parallelly to the filter surface of the elements (2), are arranged on the clean air side and which let out spray jets which are scattered in vertical direction and directed into the intermediate spaces between each two neighbouring columns or rows of hanging filter elements (2).

1/2

**Figur 1**

**Figur 2**

2/2

**Figur 3**